# EUROPEAN PATENT APPLICATION

(11) **EP 4 834 674 A1**
(43) Date of publication of application: **04.11.2026**
(21) Application number: 24910082.7
(22) Date of filing: 27.09.2024
(51) Int. Cl.: B60R 22/40, B60R 22/26

(54) **SEAT BELT DEVICE**

(30) Priority: 27.12.2023 CN 202311829717
(71) Applicant: Autoliv Development AB, 447 83 Vårgårda (SE)
(72) Inventor: GE, Liang, Shanghai 201807 (CN); ZHANG, Qihua, Shanghai 201807 (CN); XIAO, Huaming, Shanghai 201807 (CN); LI, Mingyang, Shanghai 201807 (CN); WEI, Kezhao, Shanghai 201807 (CN)
(74) Representative: Müller Verweyen
(86) International application number: PCT/CN2024/121992
(87) International publication number: WO 2025/139138

(57) **Abstract**

A seat belt device, including a seat belt retractor (1) mounted on a backrest of a seat and including a spindle (50), an acceleration sensor (10), an attitude controller (20), and a clutch device (30). The clutch device is connected to the spindle and configured to activate locking of the spindle by the acceleration sensor under a predetermined condition. The acceleration sensor includes a mounting frame (11), an inertia ball (12), and a base (13). The attitude controller is connected to a lower side of the base and is freely swingable to drive the base of the acceleration sensor to rock in the front-rear direction by means of the rocking shaft (131). The clutch device has a first fitting portion (31) and a second fitting portion (32), the first fitting portion is torsionally connected to the spindle, and when the spindle rotates in a seat belt pull-out direction under the predetermined condition, the first fitting portion rotates together with the spindle, thereby driving the second fitting portion to move from a non-engaged state to an engaged state with the acceleration sensor, so as to lock rotation of the spindle in the seat belt pull-out direction. The seat belt device enables the seat backrest to have a large adjustment angle range and multiple adjustment attitudes.

## Description

### TECHNICAL FIELD

The present invention relates to a safety device of a vehicle, in particular, to a seat belt device.

### BACKGROUND ART

A seat belt for a vehicle is a safety device. The seat belt is used to hold an occupant during a collision, and to avoid a secondary collision between the occupant and a steering wheel, a dashboard, and the like during the collision, or to prevent the occupant from being thrown out of the vehicle during the collision, thereby causing death or injury. Seat belts for vehicles may also be referred to as seat safety belts and are a type of occupant restraint apparatus. Such a seat belt is generally recognized as the most inexpensive and effective safety apparatus, and in many countries, installation of seat belts in vehicles is mandatory.

The seat belt device includes a seat belt and a seat belt retractor for winding the seat belt. During a vehicle collision or the like, when horizontal acceleration of the vehicle is greater than a specified value, the acceleration is measured by an acceleration sensor, and a locking mechanism is therefore triggered to perform an operation so that the seat belt cannot be pulled out.

Nowadays, both the backrest and the seat cushion of the seat are movable, thereby providing a more comfortable riding angle for passengers. Therefore, when the seat belt retractor including the above acceleration sensor is mounted on the seat back, the attitude of the seat belt retractor needs to be adjusted according to an inclination angle of the backrest portion, so as to ensure that the mounted acceleration sensor is not affected by the angle of the movable backrest portion of the seat and can accurately measure the acceleration.

It is considered that in autonomous driving vehicles, in order to provide seats with better comfort, seats are designed in a manner different from traditional vehicle seats. For example, the seat cushion portion of the seat is designed to have a higher height, and for example, the backrest portion of the seat is designed to have a larger inclination angle range relative to the seat cushion portion, that is, the seat has a large adjustment angle range and multiple adjustment attitudes.

Therefore, a seat belt device suitable for use in a seat having a large adjustment angle range and multiple adjustment attitudes is desired.

### SUMMARY OF THE INVENTION

The objective of the present invention is to provide a seat belt device suitable for use in a seat having a large adjustment angle range and multiple adjustment attitudes.

The present invention provides a seat belt device, comprising:
a seat belt retractor, mounted on a backrest of a seat and comprising
a spindle, around which a seat belt is wound;
an acceleration sensor, configured to measure acceleration of a vehicle in a front-rear direction, and based on the measured acceleration, lock rotation of the spindle and thus lock a pull-out operation of the seat belt;
an attitude controller, used to keep a base plane of the acceleration sensor horizontal; and
a clutch device, connected to the spindle and configured to activate locking of the spindle by the acceleration sensor under a predetermined condition;
wherein
the acceleration sensor comprises a mounting frame, an inertia ball, and a base, the base comprises a support surface for holding the inertia ball, and the base comprises a rocking shaft extending in a left-right direction of the vehicle, and is rotatably held on the mounting frame in the front-rear direction by means of the rocking shaft;
the attitude controller is connected to a lower side of the base and is freely swingable to drive the base of the acceleration sensor to rock in the front-rear direction by means of the rocking shaft; and
the clutch device has a first fitting portion and a second fitting portion, the first fitting portion is torsionally connected to the spindle, and when the spindle rotates in a seat belt pull-out direction under the predetermined condition, the first fitting portion rotates together with the spindle, thereby driving the second fitting portion to move from a non-engaged state to an engaged state with the acceleration sensor, so as to lock rotation of the spindle in the seat belt pull-out direction.

According to an embodiment of the present invention, the attitude controller is configured as a counterweight, the counterweight has a chamber, and a part of the base is accommodated in the chamber and kept at a predetermined distance from an inner wall of the chamber.

According to an embodiment of the present invention, a through hole is provided on a side wall of the chamber of the counterweight, and a protrusion is provided on a lower side surface of the base, the protrusion being positioned in the through hole.

According to an embodiment of the present invention, the first fitting portion of the clutch device is in interference fit with an end portion of the spindle, and the first fitting portion further has teeth meshing with an external module;
and/or,
the second fitting portion of the clutch device is configured as a leg portion having a bent end, the acceleration sensor further comprises a relative fitting portion, and in the engaged state, the bent end of the leg portion fits with a tooth portion of the relative fitting portion.

According to an embodiment of the present invention, the second fitting portion is formed by a strip-shaped member, and has the bent end and a bent portion spaced apart therefrom, and the bent portion is connected to the first fitting portion in an engaged manner.

According to an embodiment of the present invention, the acceleration sensor further comprises a movement member, and the movement member is linked to movement of the inertia ball in the front-rear direction so that the pull-out operation for the seat belt is locked by a locking mechanism.

According to an embodiment of the present invention, the movement member comprises a first sensor lever; the first sensor lever is rotatably held on the base in the front-rear direction, and is linked to the base by means of the inertia ball.

According to an embodiment of the present invention, the first sensor lever is rotatably connected at an edge of the base, and the relative fitting portion is spaced apart from the first sensor lever by a predetermined distance on a periphery of the base and is fixed at the edge of the base.

According to an embodiment of the present invention, the mounting frame comprises a first side portion and a second side portion opposite to each other, support holes for supporting the rocking shaft are respectively provided on the first side portion and the second side portion, and the bent end of the second fitting portion of the clutch device is positioned inside the mounting frame.

According to an embodiment of the present invention, the mounting frame is provided on an end cap for mounting the clutch device;
and/or,
the locking mechanism of the seat belt retractor comprises a ratchet wheel fixed on the spindle, and rotation of the first sensor lever on the base actuates a pawl to fit with the ratchet wheel.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, wherein
FIG. 1 schematically shows a side surface perspective view of a seat belt device according to an embodiment of the present invention.
FIG. 2 schematically shows an end surface perspective view of a seat belt device according to an embodiment of the present invention.
FIG. 3 schematically shows some components in a seat belt device according to an embodiment of the present invention.
FIG. 4 schematically shows a clutch device and an acceleration sensor in an engaged state in a seat belt device according to an embodiment of the present invention.
FIG. 5 schematically shows a clutch device in a seat belt device according to an embodiment of the present invention.

### DETAILED DESCRIPTION OF PREFERRED EMBODIMENTS

Specific embodiments of a seat belt device according to the present invention will be described below with reference to the accompanying drawings. The following detailed description and the accompanying drawings are used to exemplarily explain the principles of the present invention. The present invention is not limited to the described preferred embodiments, and various embodiments described in the present invention can be used individually or in any combination. The scope of protection of the present invention is defined by the claims.

In addition, terms for spatial relations (such as "upper", "lower", "left", "right", etc.) are used to describe a relative positional relationship between an element and another element shown in the accompanying drawings. Therefore, the terms for spatial relations may be applied to directions different from the directions shown in the accompanying drawings during use. Obviously, although all of these terms for spatial relations refer to the directions shown in the accompanying drawings for ease of explanation, a person skilled in the art will appreciate that directions different from the directions shown in the drawings may be used.

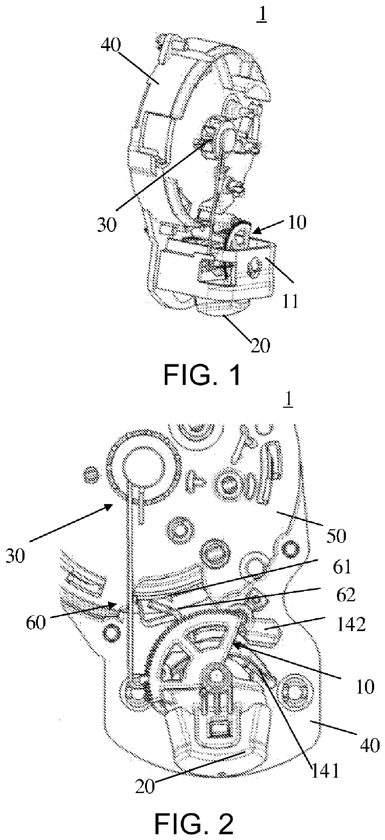

FIG. 1 schematically shows a side surface perspective view of a seat belt device according to an embodiment of the present invention. FIG. 2 schematically shows an end surface perspective view of a seat belt device according to an embodiment of the present invention. A seat belt device according to the embodiments of the present invention is described below with reference to FIG. 1 and FIG. 2.

As shown in FIG. 1 and FIG. 2, the present invention provides a seat belt device, and the seat belt device includes a seat belt retractor 1. The seat belt retractor 1 is to be mounted on a backrest (not shown) of a seat and used in conjunction with a seat belt to restrain a passenger in the seat, which can protect the passenger from being injured by colliding with interior components of a vehicle, for example, in the event of a collision. The seat belt retractor 1 includes a spindle 50, an acceleration sensor 10, an attitude controller 20, and a clutch device 30. These components of the seat belt retractor 1 will be described in detail below.

Referring to FIG. 2, the spindle 50 is configured to wind the seat belt (not shown). When the spindle 50 rotates in a first direction of rotation, the seat belt is wound onto the spindle 50. When the spindle 50 rotates in a second direction of rotation opposite to the first direction of rotation, the seat belt is unwound from the spindle 50 and pulled out. In the embodiment shown in FIG. 2, the first direction of rotation is a clockwise direction, and the second direction of rotation is a counter-clockwise direction. In one example, a retractor spring may be connected at one axial end of the spindle 50, and the retractor spring is configured to apply a force to the spindle 50 in a winding direction of the seat belt to rotate the spindle 50. At the other axial end of the spindle 50, as shown in FIG. 2, the acceleration sensor 10, the attitude controller 20, and the clutch device 30 are provided. In the present embodiment, as shown in FIG. 1, the seat belt retractor 1 further includes an end cap 40, and the spindle 50 is rotatably supported on the end cap 40 at one end. Moreover, the acceleration sensor 10, the attitude controller 20, and the clutch device 30 are all mounted on an end side of the end cap 40.

It should be noted that the acceleration sensor 10 of the seat belt retractor 1 is configured to measure the acceleration of a vehicle in a front-rear direction, and based on the measured acceleration, to lock rotation of the spindle 50 and thus lock a pull-out operation of the seat belt, that is, to lock rotation of the spindle 50 in the second direction of rotation as described above. The attitude controller 20 is configured to keep a base plane of the acceleration sensor 10 horizontal. Specifically, the attitude controller 20 is configured to always keep the base plane of the acceleration sensor 10 slightly horizontal, regardless of how an inclination angle of the backrest changes. The clutch device 30 is connected to the spindle 50 and configured to activate locking of the spindle 50 by the acceleration sensor 10 under a predetermined condition. The acceleration sensor and the clutch device in the seat belt device of the present invention are described in detail below.

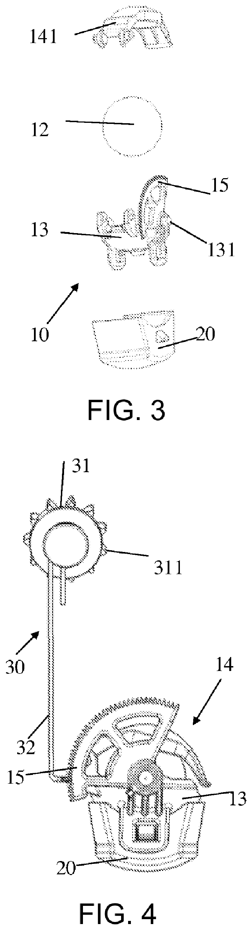

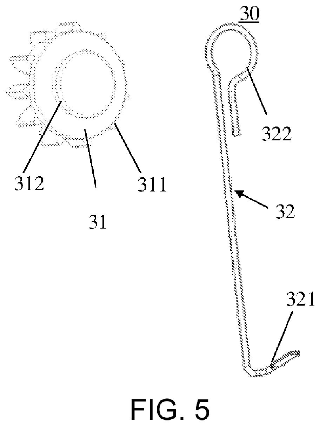

FIG. 3 schematically shows some components in a seat belt device according to an embodiment of the present invention. FIG. 4 schematically shows a clutch device and an acceleration sensor in an engaged state in a seat belt device according to an embodiment of the present invention. FIG. 5 schematically shows a clutch device in a seat belt device according to an embodiment of the present invention. A specific structure of the seat belt device of the present invention is further described below with reference to FIG. 3-FIG. 5.

As shown in FIG. 3, the acceleration sensor 10 includes a mounting frame 11 (see FIG. 1), an inertia ball 12, and a base 13.

The mounting frame 11 is generally a square frame. Referring back to FIG. 1, the mounting frame 11 may be fixedly disposed on the end cap 40. The end cap 40 has a generally cylindrical main body portion and a lower extension portion extending downward from the main body portion. The mounting frame 11 is fixed at the lower extension portion of the end cap 40. The above-described spindle 50 and the clutch device 30, which will be described in detail below, may be installed at the main body portion of the end cap 40. In addition, the inertia ball 12 of the acceleration sensor 10, the base 13, and a part (specifically, a lower part) of the clutch device 30 to be described below are accommodated in an inner space of the mounting frame 11.

The inertia ball 12 is held on a support surface of the base 13. The support surface is an upper surface of the base 13 in FIG. 3, and the upper surface is a concave surface. When subjected to acceleration that is a specified speed or more in the front-rear direction of the vehicle (for example, when sudden deceleration occurs due to a collision), the inertia ball 12 shifts from a neutral position, and measures the acceleration acting on the vehicle (namely, the seat belt retractor 1). Moreover, the support surface is in a slightly horizontal state under the action of the attitude controller 20, where slightly horizontal means that a reference plane of the support surface is in a generally horizontal direction.

The base 13 includes a rocking shaft 131 extending in a left-right direction of the vehicle. Correspondingly, holes for receiving the rocking shaft 131 are respectively provided on two opposite side surfaces of the mounting frame 11, so that the base 13 is held in the mounting frame 11 in a rotatable manner in the front-rear direction of the vehicle by means of the rocking shaft 131. Specifically, the base 13 includes a bowl-shaped main body portion, the inertia ball 12 is held on an upper side surface of the bowl-shaped main body portion, and the rocking shaft 131 is provided at an edge of the bowl-shaped main body portion. The base 13 further includes two branch portions extending downward from the bowl-shaped main body portion, and the two branch portions are configured to connect to the attitude controller 20. As shown in FIG. 3 and FIG. 4, the attitude controller 20 may be configured as a counterweight, and is connected to the lower part of the base 13 in a pendulum manner. For example, the counterweight has a chamber, and a part of the base 13 is accommodated in the chamber and is kept at a predetermined distance from an inner wall of the chamber. It can be understood that disposing the base 13 to be partially accommodated in the chamber of the counterweight can reduce space occupied by the acceleration sensor 10 and the attitude controller 20 in the height direction of the vehicle, thereby making the seat belt retractor 1 have a smaller volume. As an example of the connection manner, a through hole is provided on a side wall of the chamber of the counterweight, and a protrusion is provided on a branch portion of the base 13. The protrusion of the base 13 is positioned in the through hole of the counterweight, so that the counterweight is connected to the lower part of the base 13 in a snap-fit manner. Certainly, the connection manner between the base and the counterweight is not limited to this. For example, the counterweight may be connected to a lower side of the base by means of a rope. In this setting, the base may include a bowl-shaped main body portion without a branch portion, and the counterweight may be directly connected to a lower side surface of the bowl-shaped main body portion. It can be understood that due to the action of gravity, the freely rocking base tends to remain in the plumb position. In order to stabilize in this plumb position, a counterweight is added to the lower side of the base. Therefore, no matter what angle the vehicle and the backrest of the vehicle are at, the counterweight can drive the base 13 connected thereto to rock to the plumb position in the front-rear direction of the vehicle at the rocking shaft 131. In this case, the reference plane of the base 13 is in a substantially horizontal position. When the backrest rotates backward, the attitude controller 20, under the action of gravity, drives the base 13 of the acceleration sensor 10 to rotate toward the rear side of the vehicle. When the backrest rotates forward, the attitude controller 20, under the action of gravity, drives the base 13 of the acceleration sensor 10 to rotate toward the front side of the vehicle. Even in a situation where the vehicle is, for example, on a ramp and tilted in the front-rear direction, causing the backrest to be tilted in the front-rear direction, the attitude controller 20 can still drive the base 13 of the acceleration sensor 10 to rock in the front-rear direction of the vehicle until the base 13 is in a substantially horizontal position. Thus, in the front-rear direction of the vehicle, the support surface of the inertia ball, which serves as a reference plane, is maintained in a slightly horizontal state.

As shown in FIG. 4, the acceleration sensor 10 further includes a movement member 14. Referring to FIG. 2, the movement member 14 includes a first sensor lever 141 and a second sensor lever 142. The movement member 14 is linked to movement of the inertia ball 12 in the front-rear direction of the vehicle, so that the pull-out operation of the seat belt is locked by a locking mechanism 60. The locking mechanism 60 of the seat belt retractor 1 includes a ratchet wheel 61 fixed on the spindle 50 and a pawl 62 fitting with the ratchet wheel 61. Specifically, referring to FIG. 2, the second sensor lever 142 is, for example, rotatably fixed on the end cap 40, and includes an abutting portion (for example, in the form of a gripper) at one end thereof that abuts against the first sensor lever 141, and another abutting portion at the other end thereof that abuts against the locking mechanism 60, particularly the pawl 62. As one example of the connection manner, a pair of convex arms with holes (see the front edge in FIG. 3) are provided at the edge of the bowl-shaped main body portion of the base 13. An end portion of the first sensor lever 141 has protrusions protruding outward toward both sides. The protrusions on both sides of the first sensor lever 141 are inserted into the holes in the convex arms of the base 13, so that the first sensor lever 141 is rotatably connected to the edge of the base 13. Thus, the first sensor lever 141 is rotatably held on the base 13 in the front-rear direction of the vehicle, and when the inertia ball 12 moves away from a neutral position toward the periphery of the base, the inertia ball 12 contacts the first sensor lever 141 and applies an upward force to the first sensor lever 141. Under the action of this force, the first sensor lever 141 rotates upward relative to the base 13. Thus, the first sensor lever 141 is linked to the base 13 by means of the inertia ball 12. In addition, rotation of the first sensor lever 141 on the base 13 will actuate the pawl 62 to fit with the ratchet wheel 61. Specifically, when the first sensor lever 141 rotates upward relative to the base 13, the second sensor lever 142 will be actuated to rotate at one end of the second sensor lever 142, thereby causing the other end of the second sensor lever 142 to actuate the pawl 61 to be positioned at teeth of the ratchet wheel 61. That is, when the acceleration experienced by the vehicle in the horizontal direction is greater than a specified value, the inertia ball 12 starts to be displaced as an inertial body from the neutral position. The first sensor lever 141 of the movement member 14 links with the inertia ball 12 when the inertia ball 12 is displaced in the front-rear direction of the vehicle, and transmits this linkage to the pawl 62 of the locking mechanism 60 by means of the second sensor lever 142. Thereby, the pawl 62 abuts against the teeth on the ratchet wheel 61, causing the locking mechanism 60 to move towards the pull-out operation side of the locking seat belt, so as to lock rotation of the spindle 50 in the pull-out operation of the seat belt.

Certainly, the above embodiments are merely examples. The first sensor lever 141 may alternatively be rotatably held at another position on the base 132 in the front-rear direction of the vehicle, and any connection manner that can link with the base 13 by means of the inertia ball 12 may be adopted.

As shown in FIG. 4 and FIG. 5, the clutch device 30 has a first fitting portion 31 and a second fitting portion 32. The first fitting portion 31 is torsionally connected to the spindle 50. For example, the first fitting portion 31 is in interference fit with the end portion of the spindle 50 to rotate together with the spindle 50. In addition, when the spindle 50 rotates in the seat belt pull-out direction under the predetermined condition, the first fitting portion 31 rotates together with the spindle 50, thereby driving the second fitting portion 32 to move to switch from a non-engaged state to the engaged state with the acceleration sensor 10. Specifically, for the clutch device 30 shown in FIG. 4, when the spindle 50 rotates counterclockwise under the predetermined condition, the first fitting portion 31 of the clutch device 30 rotates counterclockwise together with the spindle 50, thereby driving the second fitting portion 32 to rotate counterclockwise from a position away from the acceleration sensor 10 until the position shown in FIG. 4. That is, the second fitting portion 32 switches from the non-engaged state to the engaged state with the acceleration sensor 10, and this engaged state is shown in FIG. 4.

As an engagement manner, as shown in FIG. 4 and FIG. 5, the second fitting portion 32 is configured as a leg portion having a bent end 321. Correspondingly, the acceleration sensor 10 further includes a relative fitting portion 15, and the relative fitting portion 15 may be configured as a fan-shaped member and has teeth. In the engaged state, the bent end 321 of the leg portion fits with the teeth of the relative fitting portion 15. As shown in FIG. 3, the relative fitting portion 15 is spaced apart from the first sensor lever 141 by the predetermined distance on a periphery of the base 13 and is fixed at the edge of the base 13. When the bent end 321 of the second fitting portion 32 of the clutch device 30 fits with the teeth of the relative fitting portion 15, the second fitting portion 32 is mutually abutted by the bent end 321 and the relative fitting portion 15, and thus is subjected to a force that hinders further counterclockwise rotation of the second fitting portion 32. Therefore, the first fitting portion 31 and the spindle 50 are also subjected to a force that hinders further counterclockwise rotation thereof. Thus, the clutch device 30 locks rotation of the spindle 50 in the seat belt pull-out direction. Certainly, the relative fitting portion of the acceleration sensor is not limited to the above-mentioned form, and any structure that can mutually abut the second fitting portion to prevent its further rotation may be used, for example, a step portion.

In one example, the second fitting portion 32 is formed by a strip-shaped member, one end of the strip-shaped member is bent to form the bent end 321, and the other end is bent to form a bent portion 322. The bent end 321 and the bent portion 322 are spaced apart from each other by a certain distance to adapt to a distance between the spindle 50 and the acceleration sensor 10. Certainly, a manufacturing manner of the second fitting portion described above is merely an example, and the second fitting portion may alternatively be manufactured in another way, for example, multiple sections are combined to form the second fitting portion. In addition, as shown in FIG. 5, in order to provide a connection between the first fitting portion 31 and the second fitting portion 32, a groove 312 is provided on one end of the first fitting portion 31, and the bent portion 322 is connected to the groove 312 of the first fitting portion 31 in a snap-fit manner. It should be noted that, since the first fitting portion 31 and the second fitting portion 32 are engaged, if a force applied to the spindle 50 that causes the spindle 50 to rotate counterclockwise is greater than a friction force between the first fitting portion 31 and the second fitting portion 32, relative rotation will occur between the first fitting portion 31 and the second fitting portion 32. In this case, the bent end 321 of the second fitting portion 32 still fits with the relative fitting portion 15 and cannot further rotate counterclockwise, while the spindle 50 and the first fitting portion 31 can further rotate counterclockwise. In other words, in the clutch device 30 of the present invention, the friction force between the first fitting portion 31 and the second fitting portion 32 is much smaller than the force applied to the clutch device 30 when the seat belt is normally pulled out. For example, the friction force is set to 10% of the force applied to the clutch device 30 when the seat belt is normally pulled out. Therefore, the clutch device 30 will not affect the pull-out operation of the seat belt in a normal use scenario.

In addition, as shown in FIG. 1, the bent end 321 of the second fitting portion 32 of the clutch device 30 is positioned on an inner side of the mounting frame 11. That is to say, in addition to being used for mounting the acceleration sensor 10, the mounting frame 11 also serves as a limiting member to limit rotation of the second fitting portion 32 in the direction of winding the seat belt around the spindle 50, that is, in the clockwise direction in FIG. 4, so as to prevent the second fitting portion 32 from interfering with the operation of other components.

In addition, as shown in FIG. 5, the first fitting portion 31 further has teeth 311 that engage with an external module. The external module is, for example, a child protection module, thereby completing protection of a child safety seat together with the child protection module.

In addition, it should be noted that, as an example, the predetermined condition described above includes the acceleration of the vehicle exceeding a predetermined value, that is, a situation where a collision causes a sharp deceleration, and also includes a situation where the vehicle is in an inclined position in the front-rear direction, for example, on a ramp. In both cases, the attitude controller can drive the base 13 of the acceleration sensor 10 to rock in the front-rear direction of the vehicle until the base 13 is in a substantially horizontal position, thereby maintaining the support surface of the inertia ball, which serves as a reference plane, in a slightly horizontal state in the front-rear direction of the vehicle.

Moreover, on this basis, it can be understood that the seat belt device of the present invention is suitable for seats with a large adjustment angle range and multiple adjustment attitudes, including seats where a seat cushion portion is designed to have a higher height, and seats where a backrest portion is designed to have a larger range of inclination angle relative to the seat cushion portion.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A seat belt device, comprising:
a seat belt retractor (1), mounted on a backrest of a seat and comprising
a spindle (50), around which a seat belt is wound;
an acceleration sensor (10), configured to measure acceleration of a vehicle in a front-rear direction, and based on the measured acceleration, lock rotation of the spindle (50) and thus lock a pull-out operation of the seat belt;
an attitude controller (20), configured to keep a base plane of the acceleration sensor (10) horizontal; and
a clutch device (30), connected to the spindle (50) and configured to activate locking of the spindle (50) by the acceleration sensor (10) under a predetermined condition;
**characterized in that**:
the acceleration sensor (10) comprises a mounting frame (11), an inertia ball (12), and a base (13), the base (13) comprises a support surface for holding the inertia ball (12), and the base (13) comprises a rocking shaft (131) extending in a left-right direction of the vehicle, and is rotatably held on the mounting frame (11) in the front-rear direction by means of the rocking shaft (131);
the attitude controller (20) is connected to a lower side of the base (13) and is freely swingable to drive the base (13) of the acceleration sensor (10) to rock in the front-rear direction by means of the rocking shaft (131); and
the clutch device (30) has a first fitting portion (31) and a second fitting portion (32), the first fitting portion (31) is torsionally connected to the spindle (50), and when the spindle (50) rotates in a seat belt pull-out direction under the predetermined condition, the first fitting portion (31) rotates together with the spindle (50), thereby driving the second fitting portion (32) to move from a non-engaged state to an engaged state with the acceleration sensor (10), so as to lock rotation of the spindle (50) in the seat belt pull-out direction.

2. The seat belt device according to claim 1, wherein the attitude controller (20) is configured as a counterweight, the counterweight has a chamber, and a part of the base (13) is accommodated in the chamber and kept at a predetermined distance from an inner wall of the chamber.

3. The seat belt device according to claim 2, wherein a through hole is provided on a side wall of the chamber of the counterweight, and a protrusion is provided on a lower side surface of the base (13), the protrusion being positioned in the through hole.

4. The seat belt device according to claim 1, wherein the first fitting portion (31) of the clutch device (30) is in interference fit with an end portion of the spindle (50), and the first fitting portion (31) further has teeth (311) meshing with an external module;
and/or,
the second fitting portion (32) of the clutch device (30) is configured as a leg portion having a bent end (321), the acceleration sensor (10) further comprises a relative fitting portion (15), and in the engaged state, the bent end (321) of the leg portion fits with a tooth portion of the relative fitting portion (15).

5. The seat belt device according to claim 4, wherein the second fitting portion (32) is formed by a strip-shaped member, and has the bent end (321) and a bent portion (322) spaced apart therefrom, and the bent portion (322) is connected to the first fitting portion (31) in an engaged manner.

6. The seat belt device according to claim 5, wherein the acceleration sensor (10) further comprises a movement member, and the movement member is linked to movement of the inertia ball (12) in the front-rear direction, so that the pull-out operation for the seat belt is locked by a locking mechanism (60).

7. The seat belt device according to claim 6, wherein the movement member comprises a first sensor lever (141); the first sensor lever (141) is rotatably held on the base (13) in the front-rear direction, and is linked to the base (13) by means of the inertia ball (12).

8. The seat belt device according to claim 7, wherein the first sensor lever (141) is rotatably connected at an edge of the base (13), and the relative fitting portion (15) is spaced apart from the first sensor lever (141) by a predetermined distance on a periphery of the base (13) and is fixed at the edge of the base (13).

9. The seat belt device according to claim 8, wherein the mounting frame (11) comprises a first side portion and a second side portion opposite to each other, support holes for supporting the rocking shaft (131) are respectively provided on the first side portion and the second side portion, and the bent end (321) of the second fitting portion (32) of the clutch device (30) is positioned inside the mounting frame (11).

10. The seat belt device according to claim 9, wherein the mounting frame (11) is provided on an end cap (40) for mounting the clutch device (30);
and/or,
the locking mechanism (60) of the seat belt retractor (1) comprises a ratchet wheel (61) fixed on the spindle (50), and rotation of the first sensor lever (141) on the base (13) actuates a pawl (62) to fit with the ratchet wheel (61).
